# Europäisches Patentamt
## European Patent Office
### Office européen des brevets

(19)

(11) Veröffentlichungsnummer: **0 290 765**
**B1**

(12)

# EUROPÄISCHE PATENTSCHRIFT

(45) Veröffentlichungstag der Patentschrift:
**03.10.90**

(51) Int. Cl.⁵: **B23K 11/36,** B65G 25/04

(21) Anmeldenummer: **88104913.4**

(22) Anmeldetag: **26.03.88**

(54) **Vorschubeinrichtung, insbesondere für Dosenzargen.**

(30) Priorität: **13.05.87 CH 1842/87**

(43) Veröffentlichungstag der Anmeldung:
**17.11.88 Patentblatt 88/46**

(45) Bekanntmachung des Hinweises auf die Patenterteilung:
**03.10.90 Patentblatt 90/40**

(84) Benannte Vertragsstaaten:
**BE CH DE ES FR GB GR IT LI NL SE**

(56) Entgegenhaltungen:
**DE-A- 3 534 209**

(73) Patentinhaber: **ELPATRONIC AG, Baarerstrasse 117,
CH-6300 Zug(CH)**

(72) Erfinder: **Wittwer, Rudolf, Dänkelbachweg 676,
CH-5426 Lengnau(CH)**

(74) Vertreter: **Hotz, Klaus, Dipl.-El.-Ing. / ETH, c/o
SOUDRONIC AG Industriestrasse 35 Postfach 11,
CH-8962 Bergdietikon(CH)**

ACTORUM AG

**Beschreibung**

Die Erfindung betrifft eine Vorschubeinrichtung, insbesondere für Dosenzargen, mit
- einem Schlitten, der längs einer Führung zwischen einem hinteren und einem vorderen Totpunkt vor- und zurückbewegbar ist,
- mindestens einer Klinke, die an dem Schlitten gelagert und zwischen einer Arbeits- und einer Ruhestellung hin- und herschwenkbar ist,
- einem Kurbeltrieb mit einer Kurbel, die drehangetrieben ist, und einem Pleuel, das durch ein Kurbelgelenk mit der Kurbel, und durch ein Pleuelgelenk mit dem Schlitten verbunden ist, um diesen längs der Führung zu bewegen, und
- einem Steuergetriebe, das die Klinke nahe dem hinteren Totpunkt des Schlittens für dessen Vorwärtsbewegung ihre Arbeitsstellung, und nahe dem vorderen Totpunkt des Schlittens für dessen Rückwärtsbewegung ihre Ruhestellung einnehmen läßt.

Eine bekannte Vorschubeinrichtung dieser Gattung (DE-A1 3 534 209) weist zwei Schlitten auf, die längs paralleler Führungen gleichzeitig und um gleiche Strecken vor- und zurückbewegbar sind. An jedem der beiden Schlitten sind mehrere Klinken in Abständen hintereinander angeordnet, so daß je eine Klinke des einen und des anderen Schlittens paarweise am hinteren Rand einer Dosenzarge angreifen können, um diese vorzuschieben. Jedem der beiden Schlitten ist ein parallel zu ihm verschiebbarer Steuerschieber zugeordnet, der mit sämtlichen Klinken des betreffenden Schlittens gelenkig verbunden ist und ein Bestandteil eines Steuergetriebes zum Schwenken der Klinken bildet.

Die beiden Steuerschieber werden ständig derart abgebremst, daß sie bei jeder Vorwärtsbewegung und jeder Rückwärtsbewegung gegenüber dem zugehörigen Schlitten um eine zum Schwenken der Klinken ausreichende Strecke zurückbleiben. Zu diesem Zweck ist an jedem Steuerschieber ein endloses, biegsames Zugglied befestigt, das über mehrere Umlenkrollen geführt ist, von denen eine mit einer Wellenbremse verbunden ist. Die beiden Wellenbremsen, die somit Bestandteile der Steuergetriebe zum Schwenken der Klinken sind, verbrauchen einen Teil der zum Bewegen der Schlitten aufgewandten Energie. Dieser Energieanteil ist zwar verhältnismäßig klein, kann aber doch aufwendige Kühlungsmaßnahmen erforderlich machen, wenn die Schlitten, und somit auch die Steuerschieber, sehr schnell vor- und zurückbewegbar sein sollen, wie es beispielsweise erforderlich ist, wenn auf modernen Dosenschweißmaschinen die Längsränder von fünfhundert und mehr Dosenzargen je Minute miteinander verschweißt werden sollen.

Der Erfindung liegt deshalb die Aufgabe zugrunde, eine Vorschubeinrichtung der eingangs beschriebenen Gattung derart weiterzubilden, daß der zum Steuern der Klinke oder Klinken erforderliche anteilige Energieaufwand noch weiter herabgesetzt wird.

Die Aufgabe ist erfindungsgemäß dadurch gelöst, daß das Steuergetriebe eine bistabile Federanordnung aufweist, die zwischen dem Pleuel und der Klinke angeordnet ist und bei jeder vollen Umdrehung der Kurbel zwei stabile Endlagen je einmal einnimmt.

Der Energieverbrauch der bistabilen Federanordnung ist vernachlässigbar gering, da er sich im wesentlichen nur aus inneren Reibungsverlusten ergibt, die mit dem ständig wiederholten Speichern und Freigeben von Federenergie zusammenhängen. Hinzukommen allenfalls noch Energieverluste durch Lagerreibung, die aber ebenfalls sehr gering gehalten werden können und im übrigen auch bei allen bekannten Vorschubeinrichtungen auftreten.

Vorzugsweise weist die bistabile Federanordnung eine Wippe auf, die um das Pleuelgelenk schwenkbar ist, und mit dem Pleuel durch eine Feder verbunden ist.

Die Feder kann eine Zugfeder sein, die an der Wippe exzentrisch angehängt ist. Eine bistabile Federanordnung läßt sich aber auch mit Federn anderer Art herstellen, z.B. in bei elektrischen Schnappschaltern bekannter Weise mit einer Druck- oder Blattfeder. In jedem Fall lassen sich solche bistabilen Federanordnungen derart gestalten oder einstellen, daß sie ein genau reproduzierbares Umschnappverhalten zeigen.

Eine besonders zweckmäßige Maßnahme, zufällige Einflüsse auf das Umschnappverhalten mit Sicherheit auszuschalten, besteht gemäß einer Weiterbildung der Erfindung darin, daß die Wippe ein Kurvenfolgeglied trägt, das im Bereich des hinteren Totpunkts des Schlittens auf eine Abweiskurve aufläuft, welche ein vorzeitiges Umschnappen der bistabilen Federanordnung in ihre der Arbeitsstellung der Klinke entsprechende Stellung verhindert.

An der Wippe könnte ein Nocken ausgebildet sein, der unmittelbar auf eine zugehörige Klinke oder Klinkenanordnung einwirkt. Bei einer zweckmäßigen Ausgestaltung der Erfindung ist jedoch die Wippe durch ein Gelenkviereck mit einer am Schlitten gelagerten Klinkensteuerwelle verbunden. Dabei ist es vorteilhaft, wenn das Gelenkviereck eine Koppelstange von einstellbarer Länge aufweist.

Als weitere Sicherheitsmaßnahme kann das Pleuel eine Steuerkurve tragen, welche die Klinke oder Klinken nahe dem hinteren Totpunkt des Schlittens in ihre Arbeitsstellung drängt und sie anschließend am Zurückprellen hindert.

Dabei ist es schließlich vorteilhaft, wenn das Gelenkviereck einen Kipphebel aufweist, der ein mit der Steuerkurve zusammenwirkendes Kurvenfolgeglied trägt.

Ein Ausführungsbeispiel der Erfindung wird im folgenden anhand schematischer Zeichnungen mit weiteren Einzelheiten erläutert.

Es zeigt:

Fig. 1 die Draufsicht einer erfindungsgemäßen Vorschubeinrichtung in einer vorderen Totpunktstellung, die teilweise als Schnitt in der waagerechten Ebene I-I in Fig. 2 gezeichnet ist,

Fig. 2 die Vorderansicht der Vorschubeinrichtung, die teilweise als Schnitt in der senkrechten Ebene II-II in Fig. 1 gezeichnet ist,

Fig. 3 die zugehörige Seitenansicht, die teilweise als Schnitt in der senkrechten Ebene III-III in Fig. 1 gezeichnet ist,

Fig. 4 den Teilschnitt in der senkrechten Ebene IV-IV in Fig. 1,

Fig. 5 eine Ansicht schräg von vorne der Vorrichtung in ihrer hinteren Totpunktstellung,

Fig. 6 eine der Fig. 3 entsprechende Ansicht der Vorrichtung beim Verlassen ihrer hinteren Totpunktstellung und

Fig. 7 eine Bewegungsdiagramm der Vorrichtung.

Die dargestellte Vorschubeinrichtung hat die Aufgabe, gerundete Dosenzargen 10 aus Blech schrittweise in den Schweißbereich einer Schweißmaschine zu fördern, in dem die Längsränder der Dosenzargen miteinander verschweißt werden. Die Schweißmaschine kann von bekannter Bauart, beispielsweise eine elektrische Widerstands-Rollennaht-Schweißmaschine sein und ist deshalb nicht dargestellt.

Die Vorschubeinrichtung hat ein Maschinengestell 12 oder ist an einem solchen befestigt und weist ein vorderes Rahmenteil 14 sowie ein hinteres Rahmenteil 16 auf, die sich parallel zueinander erstrecken und durch ein Paar parallele, waagerechte Stangen miteinander verbunden sind, die zusammen eine Führung 18 bilden. Die Stangen der Führung 18 sind hohl ausgeführt und an einen Kühlwasserkreislauf angeschlossen, damit sie im Betrieb kühl bleiben und ihre Führungsgenauigkeit beibehalten.

Auf der Führung 18 ist ein Schlitten 20 mittels eines Paars Büchsen 22 vor- und zurückbewegbar geführt. Die beiden Büchsen 22 sind durch eine vordere Traverse 24 und eine hintere Traverse 26 miteinander verbunden. An der Rückseite der hinteren Traverse 26 ist eine Wange 28 befestigt, die sich in einer zu den Stangen der Führung 18 parallelen senkrechten Ebene nach unten erstreckt.

In sämtlichen Figuren ist eine Bewegung des Schlittens 20 nach rechts eine Vorwärtsbewegung, bei der eine Dosenzarge 10 vorgeschoben werden soll. Eine Bewegung nach links ist hingegen eine Rückwärtsbewegung, die der Schlitten 20 ohne Dosenzarge ausführen soll. Zum Antreiben des Schlittens 20 dient eine Kurbel 30, die an einer stetig drehantreibbaren Antriebswelle 32 befestigt ist. Die Antriebswelle 32 ist im Maschinengestell 12 gelagert, erstreckt sich waagerecht quer zur Führung 18 und trägt ein Gegengewicht 34, das die träge Masse der Kurbel 30 und der mit ihr verbundenen Bauteile ausgleicht.

Die Kurbel 30 ist durch ein zur Antriebswelle 32 paralleles Kurbelgelenk 36 mit einem Lagerteil 38 eines Pleuels 40 verbunden. Das Pleuel 40 ist seinerseits durch ein ebenfalls zur Antriebswelle 32 paralleles Pleuelgelenk 42 mit der Wange 28, also mit dem Schlitten 20, verbunden. Die wirksame Länge des Pleuels 40 zwischen dem Kurbelgelenk 36 und dem Pleuelgelenk 42 ist mittels des Lagerteils 38 einstellbar.

Mittels des Pleuelgelenks 42 ist am Schlitten 20 ferner eine Wippe 44 gelagert. Am Pleuel 40 ist in einem Abstand von der Wippe 44 ein Zapfen 46 befestigt, der mit einem an der Wippe 44 im Abstand vom Pleuelgelenk 42 befestigten Zapfen 48 durch eine Feder 50 verbunden ist. Die Feder 50 ist im dargestellten Beispiel eine schraubenförmige Zugfeder; sie bildet zusammen mit der Wippe 44 eine bistabile Federanordnung. Dies bedeutet, daß die Wirkungslinie der Feder 50 je nach Stellung des Pleuels 40 in einem Abstand unterhalb oder in einem Abstand oberhalb der geometrischen Achse des Pleuelgelenks 42 verlaufen kann und die Zugkraft der Feder 50 dementsprechend ein Drehmoment entgegen oder in dem Uhrzeigersinn auf die Wippe 44 ausübt.

An der Wippe 44 ist in einem Abstand von der Achse des Pleuelgelenks 42 und, in bezug auf dieses um etwas mehr als 90° gegen den Zapfen 48 versetzt, ein Gelenk 52 aus gebildet, das die Wippe 44 mit einer Koppelstange 54 verbindet. Die Koppelstange 54 hat eine einstellbare Länge und ist an ihrem vom Gelenk 52 entfernten Ende durch ein Gelenk 56 mit einem Arm eines Kipphebels 58 verbunden. Der Kipphebel 58 ist drehmomentübertragend an einer Steuerwelle 60 festgeklemmt, die sich parallel zur Antriebswelle 32, somit ebenfalls quer zur Führung 18, erstreckt und in der vorderen Traverse 24 des Schlittens 20 drehbar gelagert ist.

An dem vom Gelenk 56 entfernten Ende des Kipphebels 58 ist ein Kurvenfolgeglied 62 in Gestalt einer Rolle gelagert, das mit einer am Pleuel 40 einstellbar befestigten Steuerkurve 64 zusammenwirken kann. Die Steuerkurve 64 hat einen keilförmigen Abschnitt 66 und einen daran anschließenden kreisbogenförmigen Abschnitt 68, dessen Mittelpunkt auf der geometrischen Achse des Pleuelgelenks 42 liegt.

An der Vorderseite der vorderen Traverse 24 sind zwei Lagerböcke 70 befestigt, an denen mittels je eines Achsbolzens 72 je eine Klinke 74 schwenkbar gelagert ist. Die Achsbolzen 72 erstrecken sich quer zur Führung 18 annähernd waagerecht, so daß die Klinken 74 zwischen einer unteren Endstellung, ihrer Arbeitsstellung, und einer oberen Endstellung, ihrer Ruhestellung, auf- und abschwenkbar sind. Zum Schwenken ist jede der beiden Klinken 74 durch ein oberhalb ihres Achsbolzens 72 angeordnetes Gelenk 76 mit je einer Stange 78 verbunden, die eine einstellbare Länge hat und durch ein unterhalb der Steuerwelle 60 angeordnetes Gelenk 80 mit einem an der Steuerwelle 60 festgeklemmten Hebel 82 verbunden ist.

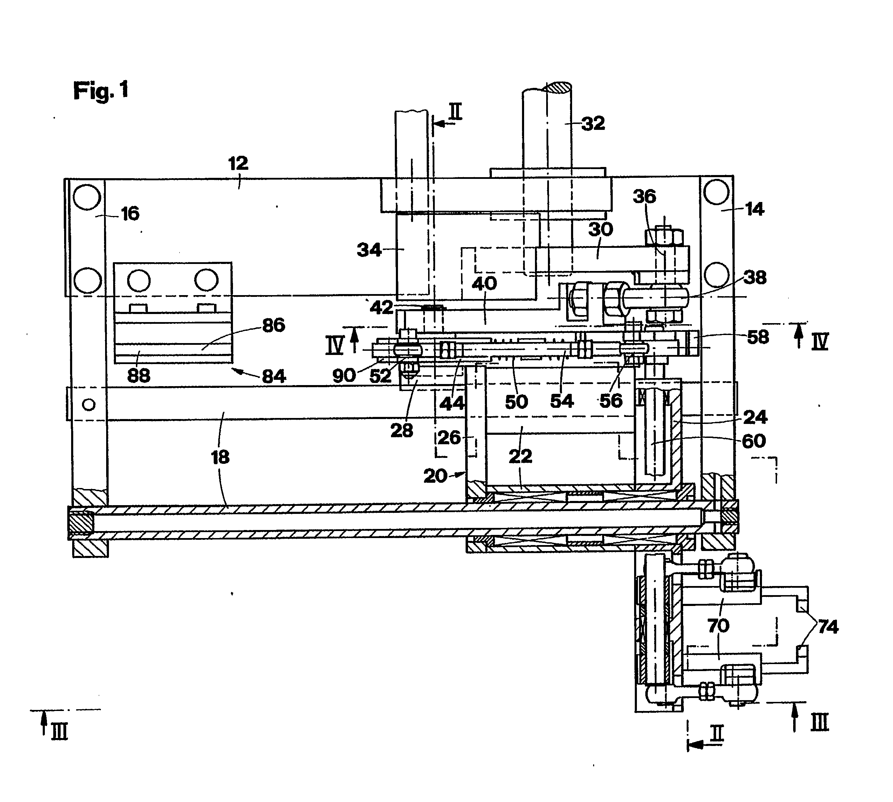

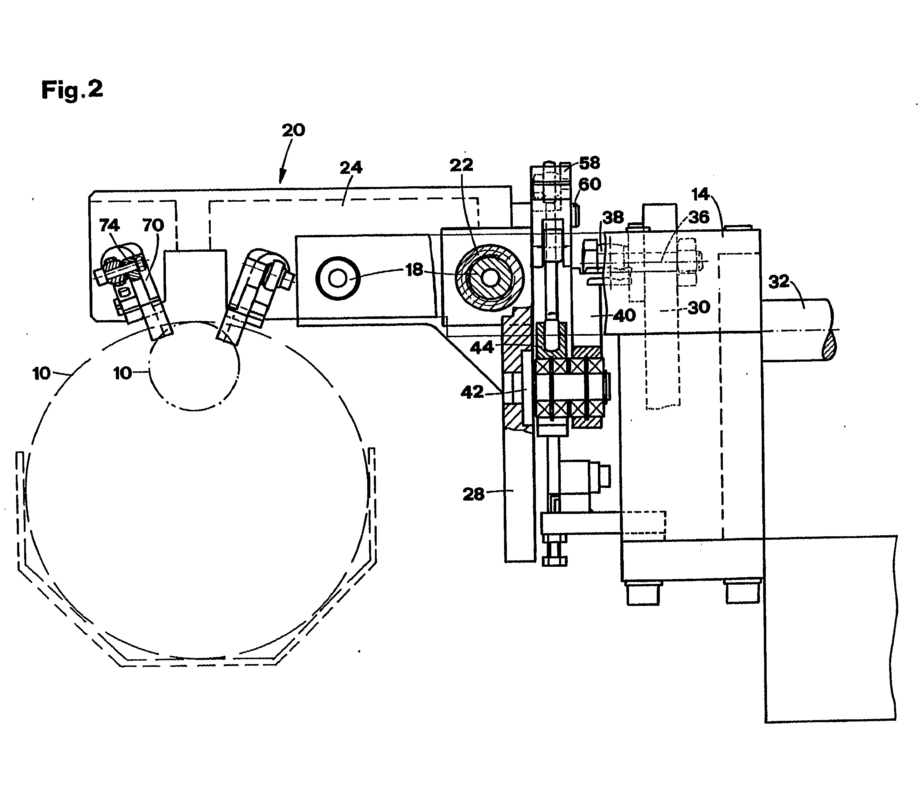

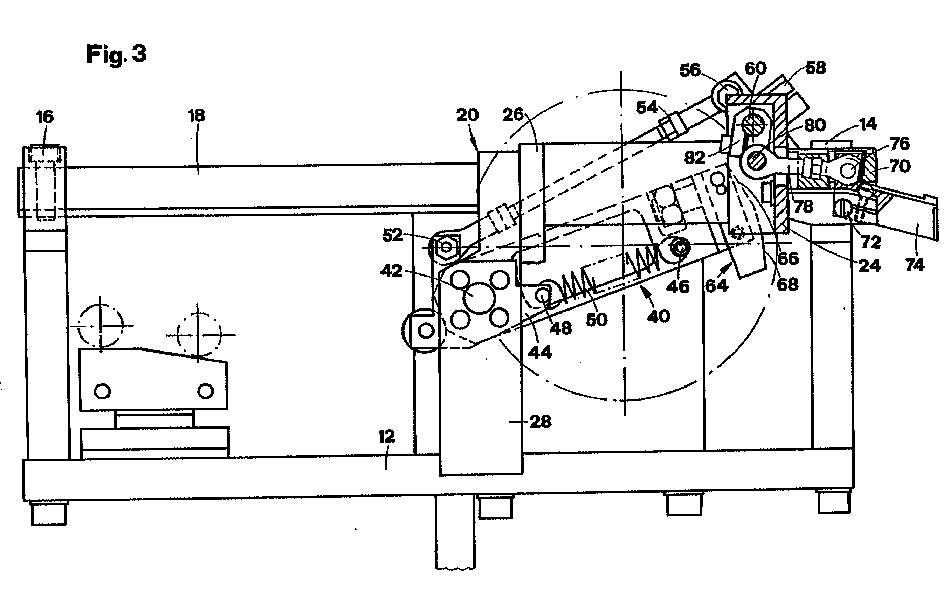

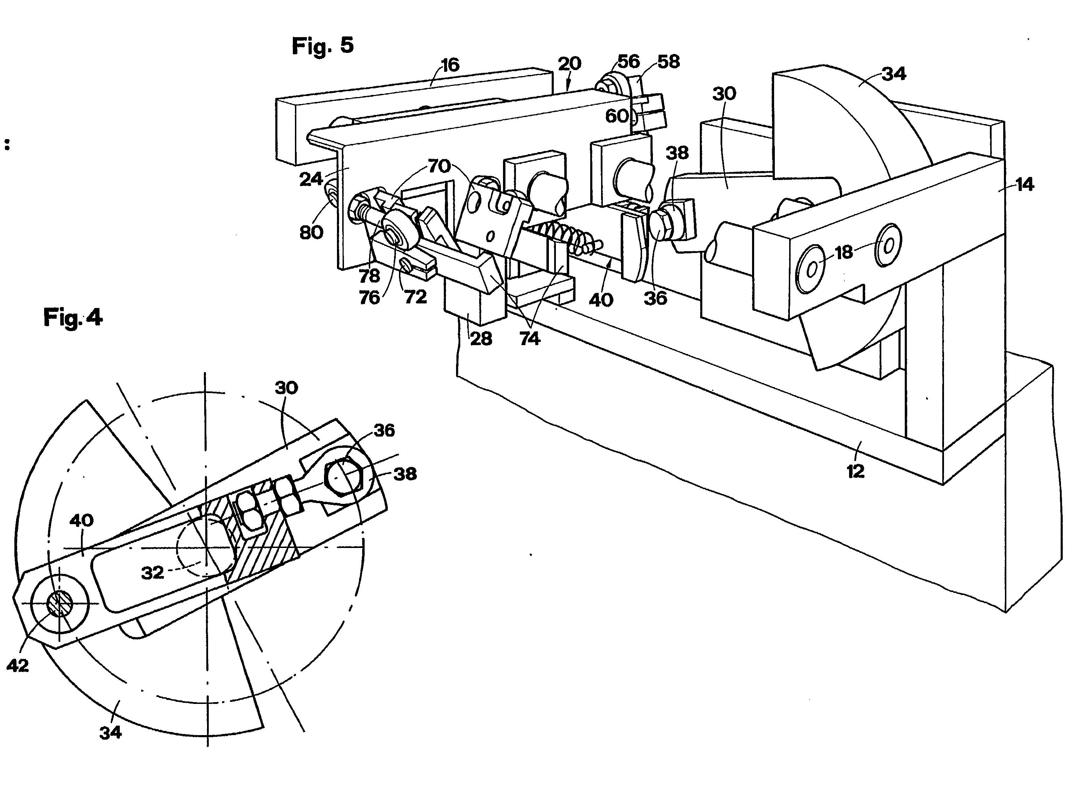

In Fig. 1 bis 4 sind die Klinken 74 in ihrer Arbeitsstellung abgebildet, in der sie dadurch gehalten sind, daß die Feder 50 gemäß Fig. 3 auf die Wippe 44 ein Drehmoment ent gegen dem Uhrzeigersinn ausübt, so daß die Koppelstange 54 ein dem Uhrzeigersinn ebenfalls entgegengerichtetes Drehmoment auf die Steuerwelle 60 ausübt. Demzufolge überträgt jede der beiden Stangen 78 auf die zugehörige Klinke 74 ein Drehmoment im Uhrzeigersinn, also im Sinne des Abwärtsschwenkens der Klinke. Die Arbeitsstellung jeder der beiden Klinken 74 ist durch die einstellbare Länge der zugehörigen Stange 78 festgelegt.

Im Bereich des hinteren Totpunkts des Schlittens 20 ist eine Abweiskurve 84 einstellbar am Maschinengestell 12 befestigt. An der Oberseite der Abweiskurve 84 ist, von vorne nach hinten gesehen, ein keilförmig ansteigender Abschnitt 86 und ein sich daran anschließender waagerechter, also zur Führung 18 paralleler Abschnitt 88 ausgebildet. Der Abweiskurve 84 ist ein an der Wippe 44 gelagertes Kurvenfolgeglied 90 in Gestalt einer Rolle zugeordnet.

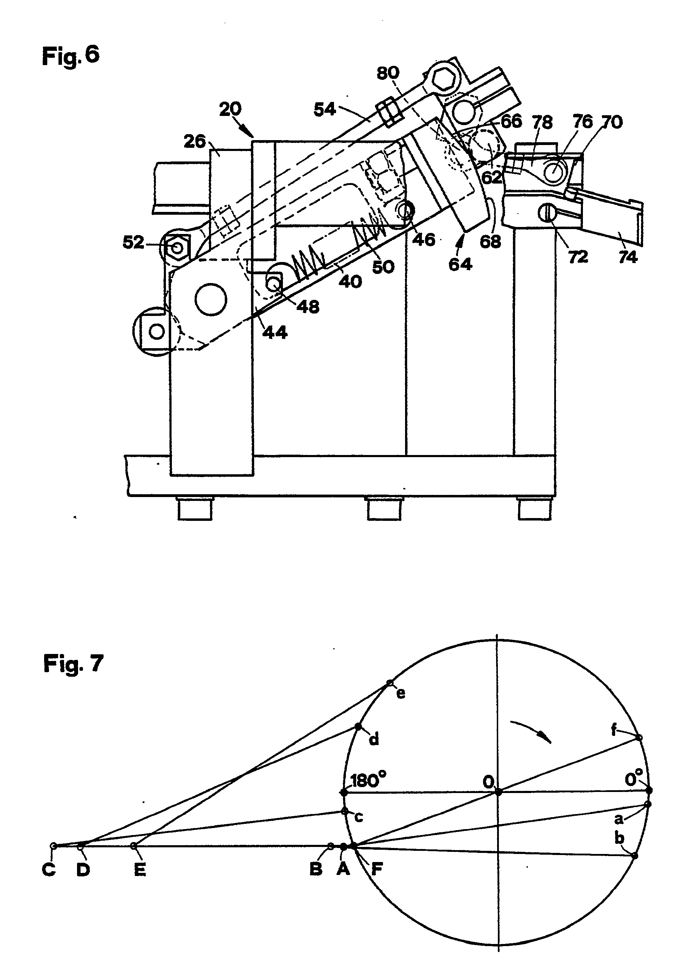

Die Arbeitsweise der beschriebenen Vorschubeinrichtung wird im folgenden anhand der Fig. 7 beschrieben:

In Fig. 7 ist ein Kreis mit den Punkten a bis f dargestellt, die verschiedenen Stellungen des Kurbelgelenks 36, genau genommen dessen geometrischer Achse, bei einer vollen Umdrehung der Kurbel 30 entsprechen. Außerdem ist eine Gerade mit Punkten A bis F dargestellt, die anzeigen, an welchen Stellen sich das Pleuelgelenk 42, genau genommen dessen geometrische Achse, bei den verschiedenen angegebenen Stellungen a bis f des Kurbelgelenks 36 befindet. Diese Gerade mit den Punkten A bis F hat, wie es der Konstruktion gemäß Fig. 1 bis 6 entspricht, vom Mittelpunkt des Kreises mit den Punkten a bis f einen Abstand, der beispielsweise 26 mm beträgt, wenn die Länge der Kurbel 30, also der Radius des Kreises, den Betrag 75 mm hat, und wenn die Länge des Pleuels 40 zwischen den geometrischen Achsen des Kurbelgelenks 36 und des Pleuelgelenks 42 den Betrag 150 mm hat.

Dreht sich die Kurbel 30 in Richtung des Pfeils ausgehend von ihrer mit 0° bezeichneten Stellung, in der sie waagerecht nach vorne gerichtet ist, dann gelangt das Kurbelgelenk 36 (im dargestellten Beispiel nach 5°) in eine Stellung a, während des Pleuelgelenk 42 die Stellung A einnimmt. Das Pleuel 40 erstreckt sich also von a nach A und nimmt dabei eine Lage ein, bei der die Wirkungslinie der Feder 50 sich der geometrischen Achse des Pleuelgelenks 42 stark genähert hat.

Auf dem weiteren Weg des Kurbelgelenks 36 zum Punkt b (beim Beispiel in die Winkelstellung 24°) und des Pleuelgelenks 42 zum Punkt B schneidet die Wirkungslinie der Feder 50 die geometrische Achse des Pleuelgelenks 42, so daß die aus der Wippe 44 und der Feder 50 bestehende bistabile Federanordnung sich durch ihren Totpunkt hindurchbewegt und anschließend umschnappt. Die Zugkraft der Feder 50, die bisher, wie in Fig. 3 dargestellt, ein Drehmoment entgegen dem Uhrzeigersinn auf die Wippe 44 ausgeübt hatte, übt nun ein Drehmoment im Uhrzeigersinn aus, so daß sich die Wippe 44 entsprechend dreht und wegen der Koppelung durch die Koppelstange 54 auch die Steuerwelle 60 sich im Uhrzeigersinn dreht. Dies hat wegen der Anordnung der Gelenke 76 und 80 die Folge, daß die beiden Klinken 74 in Fig. 3 entgegen dem Uhrzeigersinn, also nach oben in ihre Ruhestellung, geschwenkt werden.

Bei fortgesetzter Drehung der Kurbel 30 in Pfeilrichtung schiebt das Pleuel 40 den Schlitten 20 mit zunächst zunehmender und dann wieder abnehmender Geschwindigkeit nach hinten. Wenn das Kurbelgelenk 36 den Punkt c (173,5°) durchläuft, steht das Pleuelgelenk 42 im Punkt C; der Schlitten 20 hat seinen hinteren Totpunkt erreicht. Auf dem letzten Abschnitt des Weges zum hinteren Totpunkt ist das Kurvenfolgeglied 90 auf die Abweiskurve 84 aufgerollt, wodurch die Wippe 44 vorläufig daran gehindert ist, in ihre in Fig. 3 abgebildete ursprüngliche Stellung zurückzuschwenken. Damit ist ausgeschlossen, daß die aus der Wippe 44 und der Feder 50 bestehende bistabile Federanordnung durch von außen kommende Erschütterungen oder sonstige unvorhergesehene Einflüsse vorzeitig zurückschnappt.

Wenn jedoch das Kurbelgelenk 36 den Punkt d (206°), und somit das Pleuelgelenk 42 den Punkt D erreicht hat, so hat das Kurvenfolgeglied 90 den waagerechten Abschnitt 88 der Abweiskurve 84 wieder verlassen und beginnt, deren Abschnitt 86 herunterzurollen. Dadurch wird die bistabile Federanordnung 44, 50 in die Lage versetzt, zurückzuschnappen, und dies geschieht auf dem Weg des Kurbelgelenks 36 von d nach e (226°), wobei das Pleuelgelenk 42 von D nach E gelangt. Die Wirkungslinie der Feder 50 liegt nun wieder unterhalb der geometrischen Achse des Pleuelgelenks 42, so daß die Zugkraft der Feder 50, in Fig. 3 betrachtet, erneut ein Drehmoment entgegen dem Uhrzeigersinn auf die Wippe 44 und somit auch auf die Steuerwelle 60 ausübt. Dadurch werden die Stangen 78 nach vorne geschoben und schwenken die Klinken 74 abwärts in ihre Arbeitsstellung.

Um sicherzustellen, daß der verhältnismäßig kleine Winkelbereich von d nach e - im dargestellten Beispiel sind es 20° - mit Sicherheit genügt, um die Klinken 74 ihre Arbeitsstellung einnehmen zu lassen, auch wenn dem etwa durch Verschmutzung erhöhte Reibungswiderstände entgegenwirken sollten, drückt die Steuerkurve 64 mit ihrem keilförmigen Abschnitt 66 gegen das Kurvenfolgeglied 62 und erzwingt dadurch die Schwenkung des Kipphebels 58 und somit die Drehung der Steuerwelle 60 entgegen dem Uhrzeigersinn. Wenn das Kurbelgelenk 36 den Punkt e überschritten hat, wirkt der kreisbogenförmige Abschnitt 68 der Steuerkurve 64 auf das Kurvenfolgeglied 62 ein und verhindert ein Zurückprellen der Klinken 74 selbst dann, wenn diese von der bistabilen Federanordnung 44, 50 sehr plötzlich in ihre Arbeitsstellung bewegt worden sein sollten. Auf diese Weise wird sichergestellt, daß die Klinken 74 in der vorgesehenen Weise am hinteren Rand einer Dosenzarge 10 angreifen, die vorwärtsbewegt werden soll.

Die Vorwärtsbewegung endet in der Stellung f (340°) des Kurbelgelenks 36, die der Stellung F des Pleuelgelenks 42 entspricht, welche ihrerseits den vorderen Totpunkt des Schlittens 20 darstellt. Spätestens jetzt wird die vorwärtsgeschobene Dosenzarge 10 in der bei elektrischen Widerstands-Rollennaht-Schweißmaschinen üblichen Weise von Elektrodenrollen oder von einem über Elektrodenträgerrollen geführten Elektrodendraht erfaßt und weiter nach vorne mitgenommen. Der Schlitten 20 hingegen beginnt seinen Rückhub, während die Klinken 74 noch ihre Arbeitsstellung einnehmen, bis das Kurbelgelenk 36 wieder den Bereich zwischen den Punkten a und b erreicht hat, in dem die bistabile Federanordnung 44, 50 in der beschriebenen Weise umschnappt.

**Patentansprüche**

1. Vorschubeinrichtung, insbesondere für Dosenzargen (10), mit
- einem Schlitten (20), der längs einer Führung (18) zwischen einem hinteren und einem vorderen Totpunkt (C, F) vor- und zurückbewegbar ist,
- mindestens einer Klinke (74), die an dem Schlitten (20) gelagert und zwischen einer Arbeits- und einer Ruhestellung hin- und herschwenkbar ist,
- einem Kurbeltrieb mit einer Kurbel (30), die drehangetrieben ist, und einem Pleuel (40), das durch ein Kurbelgelenk (36) mit der Kurbel (30), und durch ein Pleuelgelenk (42) mit dem Schlitten (20) verbunden ist, um diesen längs der Führung (18) zu bewegen, und
- einem Steuergetriebe, das die Klinke (74) nahe dem hinteren Totpunkt (C) des Schlittens (20) für dessen Vorwärtsbewegung ihre Arbeitsstellung, und nahe dem vorderen Totpunkt (F) des Schlittens (20) für dessen Rückwärtsbewegung ihre Ruhestellung einnehmen läßt, dadurch **gekennzeichnet,** daß das Steuergetriebe eine bistabile Federanordnung (44, 50) aufweist, die zwischen dem Pleuel (40) und der Klinke (74) angeordnet ist und bei jeder vollen Umdrehung der Kurbel (30) zwei stabile Endlagen je einmal einnimmt.

2. Vorschubeinrichtung nach Anspruch 1, dadurch **gekennzeichnet,** daß die bistabile Federanordnung (44, 50) eine Wippe (44) aufweist, die um das Pleuelgelenk (42) schwenkbar ist und mit dem Pleuel (40) durch eine Feder (50) verbunden ist.

3. Vorschubeinrichtung nach Anspruch 2, dadurch **gekennzeichnet,** daß die Feder (50) eine Zugfeder ist, die an der Wippe (44) exzentrisch angehängt ist.

4. Vorschubeinrichtung nach Anspruch 2 oder 3, dadurch **gekennzeichnet,** daß die Wippe (44) ein Kurvenfolgeglied (90) trägt, das im Bereich des hinteren Totpunkts (C) des Schlittens (20) auf eine Abweiskurve (84) aufläuft, welche ein vorzeitiges Umschnappen der bistabilen Federanordnung (44, 50) in ihre der Arbeitsstellung der Klinke (74) entsprechende Stellung verhindert.

5. Vorschubeinrichtung nach einem der Ansprüche 2 bis 4, dadurch **gekennzeichnet,** daß die Wippe (44) durch ein Gelenkviereck( 52, 54, 56, 58) mit einer am Schlitten (20) gelagerten Klinkensteuerwelle (60) verbunden ist.

6. Vorschubeinrichtung nach Anspruch 5, dadurch **gekennzeichnet,** daß das Gelenkviereck (52, 54, 56, 58) eine Koppelstange (54) von einstellbarer Länge aufweist.

7. Vorschubeinrichtung nach einem der Ansprüche 1 bis 6, dadurch **gekennzeichnet,** daß das Pleuel (40) eine Steuerkurve (64) trägt, welche die Klinke oder Klinken (74) nahe dem hinteren Totpunkt (C) des Schlittens (20) in ihre Arbeitsstellung drängt und sie anschließend am Zurückprellen hindert.

8. Vorschubeinrichtung nach den Ansprüchen 5 und 7, dadurch **gekennzeichnet,** daß das Gelenkviereck (52, 54, 56, 58) einen Kipphebel (58) aufweist, der ein mit der Steuerkurve (64) zusammenwirkendes Kurvenfolgeglied (62) trägt.

**Revendications**

1. Dispositif d'avancement, notamment pour corps de boîtes de conserve (10), comprenant:
- un chariot (20) qui peut être déplacé vers l'avant et vers l'arrière le long d'une glissière (18), entre un point mort arrière (C) et un point mort avant (F),
- au moins un taquet (74) qui est monté sur ce chariot (20) et qu'on peut faire basculer dans un sens et dans l'autre entre une position de travail et une position de repos,
- un mécanisme à manivelle comprenant une manivelle (30), qui est entraînée en rotation, et une bielle (40) qui est reliée à cette manivelle (30) par une articulation de manivelle (36) et au chariot (20) par une articulation de bielle (42), de façon à déplacer ce chariot (20) le long de la glissière (18) et
- un mécanisme de commande qui, au voisinage du point mort arrière (C) du chariot (20), fait prendre au taquet (74) sa position de travail en vue du déplacement du chariot vers l'avant et, au voisinage du point mort avant (F) du chariot (20), fait prendre à ce taquet (74) sa position de repos en vue du déplacement du chariot vers l'arrière, caractérisé en ce que le mécanisme de commande comporte un agencement élastique bistable (44, 50) qui est disposé entre la bielle (40) et le taquet (74) et qui, à chaque tour complet de la manivelle (30), adopte, à chaque fois une fois, deux positions extrêmes stables.

2. Dispositif d'avancement suivant la revendication 1, caractérisé en ce que l'agencement élastique bistable (44, 50) comprend un culbuteur (44) qui peut basculer autour de l'articulation de bielle (42) et est relié à la bielle (40) par l'intermédiaire d'un ressort (50).

3. Dispositif d'avancement suivant la revendication 2, caractérisé en ce que le ressort (50) est un ressort de traction qui est accroché d'une manière excentrique sur le culbuteur (44).

4. Dispositif d'avancement suivant l'une des revendications 2 et 3, caractérisé en ce que le culbuteur (44) porte un organe suiveur de came (90) qui, dans la zone du point mort arrière (C) du chariot (20), monte sur une came de déviation (84) qui empêche que le changement brusque de position de l'agencement élastique bistable le faisant passer dans sa position correspondant à la position de travail du taquet (74) se produise d'une manière prématurée.

5. Dispositif d'avancement suivant l'une des revendications 2 à 4, caractérisé en ce que le culbuteur (44) est relié, par l'intermédiaire d'un parallélogramme articulé (52, 54, 56, 58), à un arbre de commande de taquet (60) qui est monté sur le chariot (20).

6. Dispositif d'avancement suivant la revendication 5, caractérisé en ce que le parallélogramme articulé (52, 54, 56, 58) comprend une barre d'accouplement (54) à longueur réglable.

7. Dispositif d'avancement suivant l'une des revendications 1 à 6, caractérisé en ce que la bielle (40) porte une came de commande (64) qui, au voisinage du point mort arrière (C) du chariot (20), repousse le ou les taquets (74) dans leur position de travail et les empêche ensuite de revenir en arrière.

8. Dispositif d'avancement suivant l'une des revendications 5 et 7, caractérisé en ce que le parallélogramme articulé (52, 54, 56, 58) comprend un levier basculant (58) qui porte un suiveur de came (62) coopérant avec la came de commande (64).

## Claims

1. A feed device, particularly for can bodies (10), having
   - a sliding carriage (20) which is movable forwards and back along a guide (18) between a rear and a front dead centre (C, F),
   - at least one catch (74) which is mounted on the sliding carriage (20) and can be swung forwards and backwards between a working position and a position of rest,
   - a crank drive with a crank (30) which is driven in rotation, and a connecting rod (40) which is connected by a crank joint (36) to the crank (30) and by a connecting-rod joint (42) to the sliding carriage (20) in order to move this along the guide (18), and
   - a control mechanism which allows the catch (74) to assume its working position near the rear dead centre (C) of the sliding carriage (20) for its forward movement and to assume its position of rest near the front dead centre (F) of the sliding carriage (20) for its backward movement characterised in that the control mechanism comprises a bistable spring arrangement (44, 50) which is disposed between the connecting rod (40) and the catch (74) and assumes each of two stable end positions once during each complete revolution of the crank (30).

2. A feed device according to Claim 1, characterised in that the bistable spring arrangement (44, 50) comprises a rocker (44) which is pivotable about the connecting-rod joint (42) and is connected to the connecting rod (40) by a spring (50).

3. A feed device according to Claim 2, characterised in that the spring (50) is a tension spring which is eccentrically suspended on the rocker (44).

4. A feed device according to Claim 2 or 3, characterised in that the rocker (44) carries a cam follower member (90) which, in the region of the rear dead centre (C) of the sliding carriage (22), runs onto a deflecting cam (84) which prevents the bistable spring arrangement (44, 50) from snapping over prematurely into its position corresponding to the working position of the catch (74).

5. A feed device according to any one of Claims 2 to 4, characterised in that the rocker (44) is connected by a four-bar linkage (52, 54, 56, 58) to a catch control shaft (60) mounted on the sliding carriage (20).

6. A feed device according to Claim 5, characterised in that the four-bar linkage (52, 54, 56, 58) comprises a coupling bar (54) of adjustable length.

7. A feed device according to any one of Claims 1 to 6, characterised in that the connecting rod (40) carries a cam (64) which forces the catch or catches (74) into their working position near the rear dead centre (C) of the sliding carriage (20) and then prevents them from rebounding.

8. A feed device according to Claims 5 and 7, characterised in that the four-bar linkage (52, 54, 56, 58) comprises a rocking lever (58) which carries a cam follower member (62) cooperating with the cam (64).

Fig. 1

Fig. 2

Fig. 3

Fig. 4

Fig. 5

**Fig. 6**

**Fig. 7**